# DEMANDE DE BREVET EUROPEEN

(11) **EP 4 734 527 A1**
(43) Date de publication de la demande: **29.04.2026**
(21) Numéro de dépôt: 25208217.7
(22) Date de dépôt: 13.10.2025
(51) Int. Cl.: H04N 21/2187, H04N 21/438, H04N 21/845

(54) **PROCÉDÉ DE GESTION DE L ACCÈS, PAR UN DISPOSITIF DE LECTURE, À DES CONTENUS SEGMENTÉS**

(30) Priorité: 24.10.2024 FR 2411612
(71) Demandeur: Orange, 92130 Issy-les-Moulineaux (FR)
(72) Inventeur: GASTE, Olivier, 92326 Chatillon (FR); MARCHAND, Hervé, 92326 Chatillon (FR)

(57) **Abrégé**

L'invention se rapporte à un procédé de gestion de l'accès, par un dispositif de lecture, à un premier contenu segmenté (C1) dont les segments sont décrits dans des fichiers de description respectifs (MNFc1), caractérisé en ce qu'un accès à un premier contenu donné entraîne à la fois une réception de fichiers de description associés à ce premier contenu (C1) avec une fréquence donnée et des fichiers de description associés à un deuxième contenu (C2) avec une autre fréquence.

## Description

### Domaine technique

Le domaine de l'invention est celui de la gestion de l'accès, par un dispositif de lecture, à des contenus segmentés associés à des fichiers de description respectifs décrivant des adresses d'accès aux contenus.

L'invention vise tout particulièrement des contenus segmentés accessibles selon plusieurs formats associés à des tailles respectives en octets ayant plus ou moins d'impact sur la bande passante du réseau depuis lequel le contenu est téléchargé. L'invention vise tout particulièrement les contenus téléchargés selon une technique dite de téléchargement progressif adaptatif, ou HAS, ou toutes autres techniques de téléchargement utilisant le même principe.

Un fichier de description, par exemple celui utilisé dans le contexte d'un téléchargement progressif adaptatif, est un fichier comprenant entre autres des adresses réseaux (adresse IP ou URL) des segments à télécharger et à lire par un dispositif de lecture. Autrement dit, un fichier de description décrit des segments sous forme d'adresses réseaux, à charge au dispositif de lecture d'accéder à ces segments via un réseau par exemple le réseau Internet.

Le dispositif de lecture vise tous les dispositifs de traitement de données équipés de processeurs et capables d'accéder à des segments de contenus au travers d'un réseau, de recevoir les segments depuis un réseau, éventuellement de décoder les segments reçus si ceux-ci sont codés et de requérir une restitution des segments décodés par exemple sur un écran intégré au dispositif de lecture ou externe au dispositif de lecture.

### Etat de la technique

Lors d'un accès à un contenu multimédia, un dispositif de lecture émet une requête à destination d'un serveur de contenus en indiquant le contenu multimédia (vidéo et/ou audio) choisi. Le dispositif de lecture reçoit en retour un flux de données numériques relatif à ce contenu. Dans le cadre d'un réseau de communication local, une telle requête peut transiter par une passerelle d'accès au réseau, par exemple une passerelle résidentielle.

Les données reçues sont ensuite décodées par le dispositif de lecture, puis restituées sous la forme d'un affichage de la vidéo correspondante.

La diffusion de contenus numériques sur Internet est souvent basée sur des protocoles client-serveur de la famille HTTP (de l'anglais « Hyper Text Transport Protocol »). En particulier, le téléchargement en mode progressif (en anglais HTTP Adaptative Streaming, d'abréviation HAS), des contenus numériques, aussi appelé « Streaming Adaptatif », permet de transporter et lire les données en temps réel, c'est-à-dire que les données numériques sont transmises sur le réseau et restituées par le dispositif de lecture au fur et à mesure de leur arrivée. Suite à la réception du flux, le dispositif de lecture stocke des données reçues dans une mémoire tampon (buffer en anglais) avant de les restituer. Ce mode de distribution est particulièrement utile quand le débit dont dispose l'utilisateur n'est pas garanti pour le transfert en temps réel de la vidéo.

Le téléchargement progressif adaptatif permet de surcroît de diffuser et recevoir des données suivant différentes qualités correspondant par exemple à différents débits d'encodage respectifs. Ces différentes qualités sont décrites dans le fichier de description visé ci-dessus.

Quand un utilisateur accède au flux Live diffusé en http Adaptative Streaming (HAS), le dispositif de lecture reçoit à intervalle régulier, en général toutes les deux secondes, un fichier de description qui décrit généralement les soixante dernières secondes du flux (trente (30) segments de deux (2) secondes) en fournissant des adresses IP (sigle anglosaxon de « Internet Protocol ») de segments correspondant à ces soixante dernières secondes. En recevant ce fichier de description successivement, le dispositif de lecture peut lire le contenu en continu.

En général, les segments vidéo sont choisis de courte durée car on souhaite être au plus proche du flux diffusé en temps réel que l'homme du métier appelle aussi flux Live.

A noter qu'un débit d'encodage est sélectionné parmi les débits disponibles en fonction de la bande passante disponible ou des capacités de stockage et de décodage du dispositif de lecture. Ce type de technique permet de tenir compte des variations de bande passante sur la liaison entre le dispositif de lecture client et le serveur de contenus.

Actuellement, lorsqu'on « zappe » sur une chaine Live diffusé en HAS, le dispositif de lecture (plus précisément une entité de gestion du téléchargement HAS), reçoit depuis le réseau le fichier de description de la chaine sélectionnée. Ce fichier de description décrit en général environ une minute de contenu pour une chaine Live (les segments ayant une durée de vie de moins de 1 minute y sont listés). Ensuite, après avoir récupéré le fichier de description, le dispositif de lecture va récupérer en général les deux segments vidéo et audio les plus récents grâce aux adresses de segments décrits dans le fichier de description ; ensuite, le dispositif de lecture dispositif de lecture STB, avant de commencer à lire les segments de contenu vidéo, va ensuite récupérer les segments suivants en essayant de maintenir un buffer de réception d'une quinzaine de seconde environ.

On constate donc un certain délai entre l'instant de réception d'un fichier de description et la lecture du contenu correspondant. Ce délai peut altérer l'expérience d'un utilisateur à la recherche d'un accès rapide à un contenu.

L'invention vient améliorer la situation.

### L'invention

A cet effet, selon un premier aspect fonctionnel, l'invention se rapporte à un procédé de gestion de l'accès, par un dispositif de lecture, à un premier contenu segmenté dont les segments sont décrits dans des fichiers de description respectifs, caractérisé en ce qu'un accès à un premier contenu donné entraîne à la fois une réception de fichiers de description associés à ce premier contenu avec une fréquence donnée et des fichiers de description associés à un deuxième contenu avec une autre fréquence.

Selon l'invention, après une demande d'accès à un contenu, plusieurs fichiers de description sont reçus successivement relativement au contenu demandé mais aussi à un autre contenu ; le fichier de description reçu relativement audit autre contenu est effectué par anticipation au cas où un utilisateur zappe sur cet autre contenu ; si c'est le cas, le délai de zapping ne comprendra donc pas le délai lié à la demande d'accès au fichier de description et de réception du fichier de description en retour, celui-ci ayant déjà été téléchargé par anticipation lorsqu'un accès à ce contenu est demandé. Le délai de zapping est donc diminué et devient donc inférieur à celui de l'état de la technique ; l'expérience utilisateur ne peut être que meilleure.

D'autre part, un autre avantage non négligeable est que le fait de diminuer la quantité de données téléchargées lié à un deuxième contenu permet de sélectionner un nombre de deuxième contenus plus important. En effet, dans notre invention, contrairement à l'état de la technique, on ne récupère pas le flux audio/vidéo associé au deuxième contenu, qui est volumineux, mais simplement les fichiers de description ; dans le cas d'un deuxième contenu de type de chaîne de télévision, pour chaque chaîne de télévision, on télécharge beaucoup moins de données ; on peut donc s'abonner à un nombre de chaînes plus important que simplement les chaines adjacentes par exemple.

A noter que la réception des fichiers de description peut être simultanée ou décalée dans le temps.

Selon un mode de mise en œuvre particulier de l'invention, l'accès à un contenu donné entraîne aussi le téléchargement d'une partie des segments décrits dans le fichier de description associé au deuxième contenu. Dans ce mode, le téléchargement d'une partie des segments du deuxième contenu s'effectue spontanément de la part du serveur qui gère le téléchargement des segments ; le dispositif de lecture ne transmet pas de requête de téléchargement de segments liés au deuxième contenu surtout qu'à ce moment-là le dispositif de lecture n'a pas encore reçu de fichier de description.

Selon encore un autre mode de mise en œuvre particulier de l'invention, qui pourra être mis en œuvre alternativement ou cumulativement avec le précédent, les fichiers de description associés au deuxième contenu sont reçus avec une fréquence moins élevée. On choisit par exemple de recevoir les fichiers de description associés au premier contenu toutes les deux secondes et les fichiers de description associés au deuxième contenu moins souvent par exemple toutes les trente secondes. De cette manière, on vient récupérer quinze fois moins souvent les fichiers de description, voire les derniers segments en cours de diffusion sur la chaîne concernée, liés au deuxième contenu. Ce mode évite de ne pas encombrer le réseau en particulier lorsque le nombre de deuxièmes contenus est important (on peut avoir par exemple dix à vingt chaines de télévision identifiées comme deuxième contenus) ; lors d'une mise à jour de fichier de description cela doublerait environ la bande passante globale utilisée (bande passante à la lecture du contenu en cours et à la récupération des données des deuxièmes contenus (par exemple des chaines de télévision favorites comme on verra ci-dessous)).

Selon encore un autre mode de mise en œuvre particulier de l'invention, qui pourra être mis en œuvre alternativement ou cumulativement avec les précédents, le deuxième contenu est un contenu adjacent au premier contenu. Ce mode vise le cas d'usage dans lequel un utilisateur zappe d'une unité ; celui-ci utilise typiquement les touches de zapping « -/+ » de la télécommande. Dans ce cas, anticiper un téléchargement de fichiers de description d'une voire des deux chaînes adjacentes permet d'assurer un zapping très rapide.

Selon encore un autre mode de mise en œuvre particulier de l'invention, qui pourra être mis en œuvre alternativement ou cumulativement avec les précédents, le deuxième contenu est un contenu inclut dans une liste de contenus prédéfinie. Ce mode vise un cas d'usage dans lequel le zapping peut être supérieur à une unité ; ce mode vise typiquement un zapping en sélectionnant une chaîne en sélectionnant un numéro de chaîne sur la télécommande ; par exemple, en supposant qu'un numéro est attribué à chaque chaîne, l'utilisateur zappe de la deuxième chaîne vers la neuvième chaîne.

Selon un premier aspect matériel, l'invention se rapporte à une première entité de gestion de gestion de l'accès, par un dispositif de lecture, à un premier contenu segmenté dont les segments sont décrits dans des fichiers de description respectifs, caractérisé en ce qu'elle comprend un module apte, suite à un accès à un contenu donné, à requérir une réception de fichiers de description associés à ce premier contenu avec une fréquence donnée et des fichiers de description associés à un deuxième contenu avec une autre fréquence.

Selon un autre aspect matériel, l'invention se rapporte à un dispositif de lecture comprenant une entité de gestion telle que définie ci-dessus.

Selon un autre aspect matériel, l'invention a pour objet un programme d'ordinateur apte à être mis en œuvre sur une entité de gestion telle que définie ci-dessus, le programme comprenant des instructions de code qui, lorsqu'il est exécuté par un processeur, réalise les étapes du procédé de gestion définies ci-dessus.

Selon un autre aspect matériel, l'invention a pour objet un support de données sur lequel a été mémorisée au moins une série d'instructions de code de programme pour l'exécution d'un procédé de gestion tel que défini ci-dessus.

Selon un deuxième aspect fonctionnel, l'invention se rapporte à un procédé de gestion de la transmission de fichiers de description associés à un premier contenu diffusé en temps réel, dont les segments sont décrits dans des fichiers de description respectifs, caractérisé ce qu'il comprend suite à une demande d'accès au premier contenu, une transmission à la fois de fichiers de description associés à ce premier contenu avec une fréquence donnée, et des fichiers de description associés à un deuxième contenu avec une autre fréquence.

Selon un autre aspect matériel, l'invention se rapporte à une entité de gestion de la transmission de fichiers de description associés à un premier contenu diffusé en temps réel, dont les segments sont décrits dans des fichiers de description respectifs, caractérisé ce qu'elle comprend un module de transmission apte à, suite à une demande d'accès au premier contenu, transmettre à la fois de fichiers de description associés à ce premier contenu avec une fréquence donnée et des fichiers de description associés à un deuxième contenu avec une autre fréquence.

Selon un autre aspect matériel, l'invention se rapporte à un serveur de contenus comprenant une deuxième entité telle que définie ci-dessus.

Selon un autre aspect matériel, l'invention se rapporte à un programme d'ordinateur apte à être mis en œuvre sur une deuxième entité de gestion telle que définie ci-dessus, le programme comprenant des instructions de code qui, lorsqu'il est exécuté par un processeur, réalise les étapes du procédé définies en liaison avec le deuxième aspect fonctionnel.

Enfin, selon un autre aspect matériel, l'invention se rapporte à un support de données sur lequel a été mémorisée au moins une série d'instructions de code de programme pour l'exécution d'un procédé de gestion de la transmission de fichiers de description.

Les supports visés ci-dessus peuvent être n'importe quelle entité ou dispositif capable de stocker le programme. Par exemple, un support peut comporter un moyen de stockage, tel qu'une ROM, par exemple un CD ROM ou une ROM de circuit microélectronique, ou encore un moyen d'enregistrement magnétique, par exemple un disque dur. D'autre part, un support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

L'invention sera mieux comprise à la lecture de la description qui suit, donnée à titre d'exemple et faite en référence aux dessins annexés sur lesquels :
[Fig 1] représente une architecture de téléchargement progressif sur Internet basée sur l'utilisation du streaming adaptatif selon un mode de réalisation du procédé de l'invention ;
[Fig 2] illustre de façon schématique la structure matérielle d'un serveur apte à transmettre des fichiers de description ;
[Fig 3] illustre de façon schématique la structure matérielle d'un dispositif de lecture apte à lire des flux multimédias en temps réel ;
[Fig 4] illustre un contenu et les segments disponibles pour ce contenu.
[Fig 5] illustre un mode de réalisation du procédé de l'invention ; cette figure illustre la communication entre le dispositif de lecture et le serveur de contenus lors de l'accès à un contenu.

### Description détaillée de modes de réalisation de l'invention

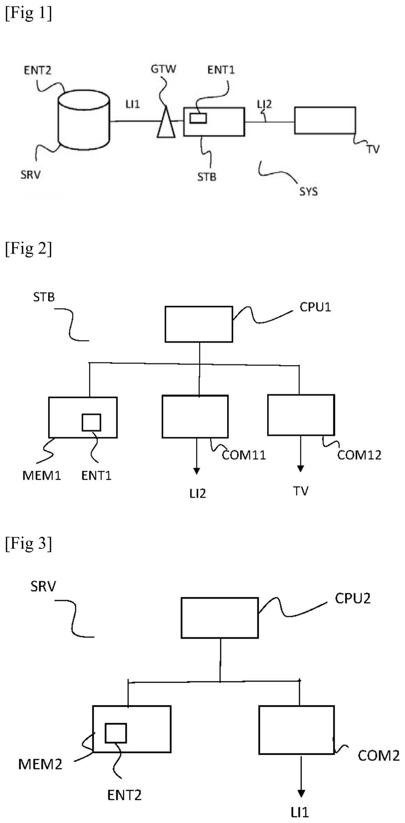

La figure 1 représente un système informatique SYS dans lequel est mis en œuvre un réseau de diffusion de contenus appelé CDN (Content Distribution Network) par l'homme du métier depuis lequel sont transmis des contenus à destination de dispositifs clients ou dispositifs de lecture de contenus et des fichiers de description associés aux contenus multimédias.

Dans notre exemple, le système SYS comprend un seul dispositif de lecture STB. Cependant l'invention s'applique à un nombre quelconque de dispositifs de lecture.

Le dispositif de lecture est par exemple un dispositif de lecture numérique tel qu'un décodeur.

Le contenu multimédia visé ici est un contenu vidéo correspondant par exemple à une chaîne de télévision sur laquelle sont diffusés des programmes télévisés dits Live c'est-à-dire diffusés en temps réel. Un programme Live peut être un programme dont la captation s'effectue en direct (par exemple un événement sportif) ou dont la captation a déjà été effectuée (par exemple une émission de télévision enregistrée par la chaîne)

Dans notre exemple, le dispositif de lecture STB est connecté à un terminal de restitution TV tel qu'une télévision.

Dans notre exemple, le dispositif de lecture STB est connecté sur un port du dispositif de restitution TV ; le dispositif de lecture STB et le dispositif de restitution TV pourrait aussi former un seul et unique dispositif.

Dans notre exemple, le dispositif de lecture STB est situé dans un réseau local LAN (sigle anglosaxon de « Local Area Network ») géré par une passerelle domestique GTW. Le contexte du réseau local est donné à titre d'exemple et pourrait être transposé aisément à un réseau Internet de type « best effort », un réseau d'entreprise, etc. On verra dans la suite que le dispositif de lecture STB comprend une première entité de gestion ENT1.

La passerelle GTW est apte à communiquer via une liaison de communication LI1 qui peut être un réseau de télécommunication tel qu'un réseau étendu WAN connu de l'homme du métier.

Le système informatique SYS met en œuvre un réseau de diffusion de contenus appelé CDN (Content Distribution Network) par l'homme du métier depuis lequel des contenus sont transmis à destination de dispositifs clients ou dispositifs de lecture de contenus STB.

Le réseau CDN est constitué de serveurs reliés en réseau dans le réseau étendu ; ces serveurs coopèrent afin de mettre des contenus multimédias à disposition des utilisateurs en mode unicast. Afin de simplifier l'exposé de l'invention, un seul serveur de contenus SRV sera représenté sur la figure 1 pour représenter le CDN. Le serveur de contenus SRV se trouve, dans notre exemple, dans le réseau étendu WAN.

Le serveur de contenus SRV reçoit par exemple des chaînes de contenus de télévision numérique en provenance d'un réseau de télévision diffusée (non représenté), et les met à disposition en temps réel à des terminaux clients, ici le dispositif de lecture STB.

Dans notre exemple, les contenus C1 sont mis à disposition en mode unicast dans un format donné. Un tel contenu C1 est, par exemple, un contenu téléchargé en mode de streaming adaptatif. La norme MPEG-DASH (pour l'anglais "Dynamic Adaptive Streaming over HTTP", en français « diffusion en flux adaptatif dynamique sur HTTP ») est un standard de format de diffusion audiovisuelle sur Internet ; ce standard se base sur la préparation du contenu en différentes représentations de qualité et débit variables, découpées en segments de courte durée (de l'ordre de quelques secondes), également appelés « chunks » par l'homme du métier. Chacun de ces segments est rendu disponible individuellement au moyen d'un protocole d'échange entre le terminal de restitution et le serveur fournisseur de contenus multimédias. Le protocole principalement ciblé est le protocole HTTP, mais d'autres protocoles (par exemple FTP) peuvent également être utilisés. L'organisation des segments et les paramètres associés sont publiés dans un fichier de description au format XML. Nous ne rentrerons pas plus dans les détails de ce mode de téléchargement car sans intérêt pour l'exposé de l'invention.

Un exemple de fichier Manifest ou « fichier de description » (MPD) conforme à la norme MPEG-DASH et comportant la description de contenus disponibles dans trois qualités différentes (N1 = 512 kb/s, N2 = 1024 kb/s, N3 = 2048 kb/s) des contenus fragmentés (ou segmentés) est présenté en Annexe 1. Ce fichier de description simplifié décrit des contenus numériques dans une syntaxe XML (de l'Anglais « extended Markup Language»), comprenant une liste de contenus sous forme de segments classiquement décrits entre une balise ouvrante (<SegmentList>) et une balise fermante (</SegmentList>). La découpe en segments permet notamment de s'adapter finement aux fluctuations de la bande passante. Chaque segment correspond à une certaine durée (champ « duration ») avec plusieurs niveaux de qualité et permet de générer leurs adresses (URL - Uniform Resource Locator). Cette génération est faite dans cet exemple à l'aide des éléments « BaseURL » (« HTTP://server.com») qui indique l'adresse du serveur de contenus et « SegmentURL » qui liste les parties complémentaires des adresses des différents segments :
- « C1_512kb_1.mp4 » pour le premier fragment du contenu « C1 » à 512 kilobits par seconde (« kb ») au format MPEG-4 (« mp4 »),
- « C1_512kb_2.mp4 » pour le second fragment,
- etc.

La figure 2 représente une architecture d'un dispositif de lecture STB. Ce dispositif STB comprend, classiquement, des mémoires MEM1 associées à un processeur CPU1. Les mémoires peuvent être de type ROM (de l'anglais « Read Only Memory ») ou RAM (de l'anglais « Random Access Memory ») ou encore Flash.

Le dispositif de lecture STB peut transmettre un contenu à restituer au dispositif de restitution TV via un module de communication COM12. Ce module COM12 est par exemple une liaison HDMI.

Le dispositif de lecture STB communique avec la passerelle via un module Ethernet pour une communication locale avec fils ou via un module radio de type WiFi pour une communication locale sans fils avec la passerelle résidentielle GTW. Le module en question est référencé COM11 sur la figure 2.

Le dispositif de lecture STB comprend un module de téléchargement en mode streaming HAS (non représentée) apte à gérer le téléchargement de segments du contenu. Le dispositif de lecture STB comprend également une entité de gestion ENT1, dite deuxième entité de gestion dans la suite apte à lire un fichier de description construit spécifiquement lors d'une lecture en mode rattrapage comme cela est expliqué ci-dessous. Le module de téléchargement HAS et la première entité ENT1 peuvent ne former qu'une seule entité auquel cas le module HAS est intégré à la première entité ENT1 ou être séparées l'une de l'autre.

En référence à la figure 3, le serveur SRV est également équipé d'au moins un processeur CPU2 et de mémoires MEM2 pour la réalisation de traitement informatique. Le serveur est également équipé d'une entité de gestion ENT2, dite deuxième entité de gestion, apte à gérer la transmission d'un contenu et du fichier de description associés au contenu depuis le serveur SRV à destination d'un ou plusieurs dispositifs de lecture, ici vers le dispositif de lecture STB. Le serveur SRV communique avec la passerelle GTW via réseau WAN. Le serveur comporte, la communication avec le réseau WAN, un module de communication référencé COM2 sur la figure 3. On s'intéressera essentiellement dans la suite à la transmission du fichier de description plutôt que de la transmission des segments.

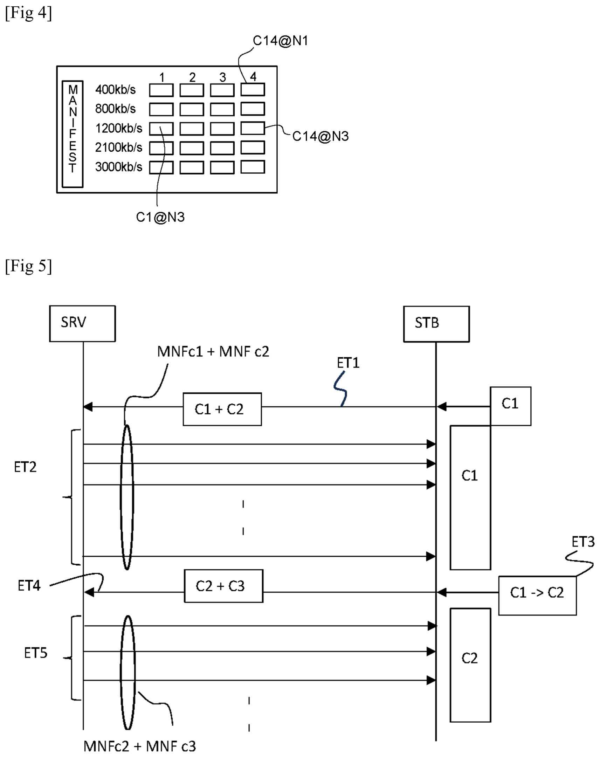

On présente désormais, en relation avec la figure 4, une vue schématique d'un contenu principal C1 découpé en segments et stocké dans le serveur de contenus SRV. Plus précisément, le serveur de contenu HAS expose une vidéo C1 sous forme de segments C1i@Nj encodés à différents débits d'encodage Nj, où l'indice i désigne un identifiant temporel du segment C1i@Nj.

Le module de téléchargement HAS, appelé mode de téléchargement classique ci-dessous, du dispositif de lecture STB est chargé de venir récupérer les segments auprès du serveur de contenu HAS en choisissant la qualité vidéo Nj en fonction de la ressource réseau disponible. On ne décrit pas ici plus en détail la façon dont le module de téléchargement HAS choisit le débit d'encodage du prochain segment vidéo à télécharger. On rappelle que, le plus souvent, le principe général de tels algorithmes repose sur le téléchargement d'un premier segment au débit d'encodage le plus faible proposé dans le fichier de description, et sur l'évaluation du temps de récupération de ce premier segment. Sur cette base, le module de téléchargement HAS évalue si, en fonction de la taille du segment et du temps mis pour le récupérer, les conditions réseau permettent de télécharger le segment suivant à un débit d'encodage plus élevé. Certains algorithmes reposent sur une augmentation progressive du niveau de qualité des segments de contenu téléchargés ; d'autres proposent des approches plus risquées, avec des sauts dans les niveaux des débits d'encodage des segments successifs.

Dans le cas classique, si un segment vidéo dure trois secondes, la récupération du segment par le module de téléchargement HAS ne doit pas excéder 3 secondes, afin de permettre une restitution sans interruption du contenu par le dispositif de lecture STB. Il convient donc pour le module de téléchargement HAS d'opérer le meilleur compromis entre une qualité de restitution, et donc un débit d'encodage, aussi élevés que possible, et le temps de téléchargement du segment, qui doit être suffisamment faible pour permettre une restitution en continu sur le téléviseur TV.

Dans un premier temps, le module HAS récupère le fichier de description qui correspond au contenu vidéo C1 afin de découvrir les segments disponibles du contenu vidéo C1, et les différentes qualités vidéo Nj associées. Dans l'exemple de la figure 4, le contenu C1 est par exemple proposé sous forme de segments de durée 3s, avec un premier débit d'encodage N1 = 400 kb/s, un deuxième débit d'encodage N2 = 800 kb/s, un troisième débit d'encodage N3 = 1200 kb/s, etc.

Dans un mode de fonctionnement normal, non illustré sur la figure 4, le module HAS opère le téléchargement par exemple, des segments successifs C11@N1 (soit le premier segment temporel à un débit d'encodage de 400 kb/s), puis C12@N3 (soit le deuxième segment temporel à un débit d'encodage de 1200 kb/s), puis C13@N3 (soit le troisième segment temporel à un débit d'encodage de 1200 kb/s), etc.

Les différents segments téléchargés par le module de téléchargement HAS sont ensuite transmis à un module d'affichage apte à requérir un affichage sur le téléviseur TV.

L'algorithme mis en œuvre par le module de téléchargement HAS pour déterminer quel segment à quel débit d'encodage doit être téléchargé en mode de fonctionnement normal est sans intérêt pour l'exposé de l'invention. Cet algorithme ne sera donc pas décrit ici plus en détail.

Quand un utilisateur accède à un flux Live diffusé en temps réel (contenu Live) en http Adaptative Streaming (HAS), le dispositif de lecture STB, sous-entendu l'entité HAS installé sur ce dispositif, récupère en général toutes les 2 secondes un fichier de description, ci-après appelé fichier de description temps réel, qui décrit généralement les soixante dernières secondes du flux (30 segments de 2 secondes). On peut alors décider de stocker en mémoire (buffer) une certaine partie du flux (jusqu'à 60 secondes au maximum donc) ; les segments vidéo sont de courte durée car on souhaite être au plus proche du vrai Live c'est-à-dire de l'événement filmé, par exemple un match de Football. C'est également pour cette raison qu'on récupère le fichier de description toutes les deux secondes et qu'on limite la profondeur de buffer en général autour de quinze secondes afin de ne pas engendrer un décalage trop important entre le match de Football et sa restitution sur un écran.

Selon l'invention, lors d'un accès à un contenu en cours de diffusion, le dispositif de lecture STB va recevoir avec une fréquence donnée, par exemple toutes les deux secondes, non seulement le fichier de description associé au contenu demandé, mais aussi d' autre fichiers de description associé à un autre contenu en cours de diffusion avec une autre fréquence de transmission, par exemple toutes les trente secondes.

On verra dans la suite, dans des modes de réalisation, que l'invention peut être mise en œuvre dans le dispositif de lecture dispositif de lecture STB et/ou dans le serveur SRV.

La figure 5 illustre un mode de réalisation du procédé de l'invention. Sur cette figure 5, sont représentés deux axes verticaux correspondants respectivement à deux entités à savoir la première entité ENT1 présente sur le dispositif de lecture STB et la deuxième entité ENT2 présente sur le serveur SRV. La figure 5 illustre les échanges de données qui ont lieu entre le dispositif de lecture STB et le serveur de contenu SRV.

A noter que sur cette figure 5, seule une partie des messages utiles à la compréhension de l'invention sont illustrés. Par exemple, après réception d'un fichier de description par le dispositif de lecture STB, ce dernier requiert en principe un accès aux segments décrits dans ce fichier de description reçu ; nous avons choisi de ne pas faire apparaître ces messages d'accès car sans intérêt pour l'exposé de l'invention.

Les étapes sont les suivantes :
Lors d'une étape référencée ET1 (C1+C2), le dispositif de lecture STB requiert un accès à un contenu C1, dit premier contenu. La demande d'accès peut avoir pour origine une demande d'accès issue d'un dispositif de télécommande.

Suite à la transmission de la demande d'accès au premier contenu C1, le dispositif de lecture STB reçoit en retour le fichier de description associé au contenu sélectionné et aussi un fichier de description associé à un autre contenu, dit deuxième contenu.

Dans ce premier mode de réalisation, lors de la première étape ET1, le dispositif de lecture STB transmet non seulement une demande d'accès au premier contenu C1 mais aussi une demande d'accès au deuxième contenu C2. On verra dans un autre mode que le serveur SRV peut recevoir une demande d'accès à un premier contenu et transmettre en retour le fichier de description associé au contenu sélectionné et aussi un fichier de description associé au deuxième contenu ; dans ce mode, le dispositif de lecture STB est déchargé de la gestion de la transmission de la demande d'accès au deuxième contenu C2.

Lors d'une étape ET2, le dispositif de lecture STB reçoit en retour, successivement, des fichiers de description associés au premier contenu sélectionné C1 suite à leurs productions respectives sur le serveur SRV mais aussi des fichiers de description associés au deuxième contenu C2 suite à leurs productions respectives sur le serveur SRV.

Grâce aux fichiers de description associés au premier contenu, le dispositif de lecture STB peut accéder aux segments décrits dans ces fichiers et peut lire et requérir une restitution du contenu sur le dispositif de restitution TV.

A ce stade, le dispositif de lecture STB reçoit des fichiers de description associés au deuxième contenu C2 et les stockent jusqu'à réception d'une éventuelle demande lecture de ce deuxième contenu C2.

On suppose maintenant, que l'utilisateur zappe du premier contenu C1 vers le deuxième contenu C2 avec sa télécommande lors d'une étape ET3, par exemple en appuyant sur la touche « + » de la télécommande. Le dispositif de lecture STB reçoit la commande d'accès au deuxième contenu C2

Lors d'une étape ET4, suite à la réception de la commande d'accès au deuxième contenu C2, le dispositif de lecture STB transmet à destination du serveur SRV une demande d'accès au deuxième contenu C2 ; cette demande est reçue par le SRV ; ce dernier poursuit la transmission des fichiers de description associés à ce deuxième contenu C2.

A ce stade, le SRV peut arrêter ou poursuivre la transmission des fichiers de description associés au premier contenu C1.

Dans ce premier mode, le dispositif de lecture STB recevant déjà les fichiers de description relatifs au deuxième contenu C2 peut accéder aux segments décrits dans le dernier fichier de description reçu et lire les segments de ce deuxième contenu C2 lors d'une étape ET5.

La figure 6 illustre un deuxième mode de réalisation pouvant être mis en œuvre isolément ou en combinaison avec le premier mode de réalisation.

Dans ce deuxième mode, lors d'une étape référencée ET1 (C1), le dispositif de lecture STB requiert un accès à un premier contenu C1. La demande d'accès peut avoir pour origine une demande d'accès issue d'un dispositif de télécommande.

Dans ce mode, le serveur SRV reçoit la demande d'accès au premier contenu C1 et requiert une transmission en retour de fichiers de description associés au premier contenu demandé et des fichiers de description associés à un deuxième contenu C2.

Dans ce mode, le dispositif de lecture STB ne transmet pas de demande de réception d'un deuxième contenu C2 ; le serveur SRV décide spontanément de transmettre des fichiers de description d'un deuxième contenu C2.

Les autres étapes sont les mêmes que celles décrites en référence à la figure 5.

Les modes décrits précédemment peuvent faire l'objet de variantes :
Selon une variante possible, l'accès au premier contenu donné C1 entraîne aussi le téléchargement d'une partie des segments décrits dans le fichier de description associé au deuxième contenu. Dans notre exemple, seuls deux segments sont téléchargés ; cela permet de lire les segments téléchargés sans attendre.

En outre, les fichiers de description associés au premier contenu sont reçus successivement avec une fréquence donnée. selon l'invention, les fichiers de description associés au deuxième contenu sont reçus avec autre fréquence, dans notre exemple avec une fréquence moins élevée. Cependant, une même fréquence peut être utilisée si en particulier il n'y a pas de problème de bande passante. Les fichiers de description associés au deuxième contenu peuvent aussi être reçus avec une fréquence variable qui est fonction par exemple de la bande passante disponible.

Selon une autre variante, s'il y a plusieurs deuxième contenus, les fichiers de description associés à ces deux contenus peuvent être reçus à différents instants de manière à ne pas les recevoir en même temps.

Selon une autre variante, l'étape ET4 n'a pas lieu ; le dispositif de lecture STB recevant déjà le deuxième contenu, celui-ci n'a pas besoin de requérir un accès à ce deuxième contenu auprès du serveur SRV. La transmission malgré tout d'une demande d'accès au deuxième contenu C2 permet d'informer le serveur SRV, ce dernier pouvant prendre des mesures en conséquence telle que la transmission de fichiers de description associé à un troisième contenu C3.

Selon une autre variante, l'invention peut être mise en œuvre à chaque accès à un contenu. Ici, après réception par le dispositif de lecture STB de la commande d'accès au deuxième contenu C2, lors d'une étape ET4, le dispositif de lecture STB transmet une demande d'accès à un troisième contenu C3. Les étapes décrites ci-dessus sont de nouveau exécutées.

Dans les modes qui précèdent, un seul deuxième contenu C2 est demandé, cependant, le nombre de contenu demandé en plus du contenu à restituer C1 est quelconque.

Le deuxième contenu C2 peut aussi être choisi de plusieurs manières dont les suivantes :
Selon une première manière, le deuxième contenu C2 est un contenu adjacent à celui en cours de restitution à savoir le premier contenu C1. Cette variante est pratique lors d'un zapping, ce dernier réalisation un changement de chaîne par incrémentation d'une unité ou décrémentation d'une unité.

Selon une deuxième manière, pouvant être mise en œuvre alternativement ou cumulativement avec la première variante, le deuxième contenu C2 est un contenu choisi en fonction d'un profil utilisateur ; ce profil peut par exemple inclure explicitement des chaînes de télévision favorites. Ces dernières peuvent aussi être déduites grâce à un suivi des habitudes de l'utilisateur sur une plage temporelle donnée.

Selon une troisième manière, pouvant être mise en œuvre alternativement ou cumulativement avec les précédentes variantes, le deuxième contenu C2 est choisi en fonction d'un niveau d'audience prévisible. Par exemple si les chaînes de télévision France2, et M6 diffusent un programme à forte audience à un instant t, les fichiers de description de ces chaînes sont transmis successivement en plus en des fichiers de description du contenu en cours de restitution.

Précisons enfin ici aussi ici que le terme « entité » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour les modules concernés. De la même manière, un composant matériel correspond à tout élément d'un ensemble matériel (ou hardware) apte à mettre en œuvre une fonction ou un ensemble de fonctions pour le module concerné (circuit intégré, carte à puce, carte à mémoire, etc.).

### ANNEXE 1 : exemple de fichier manifest

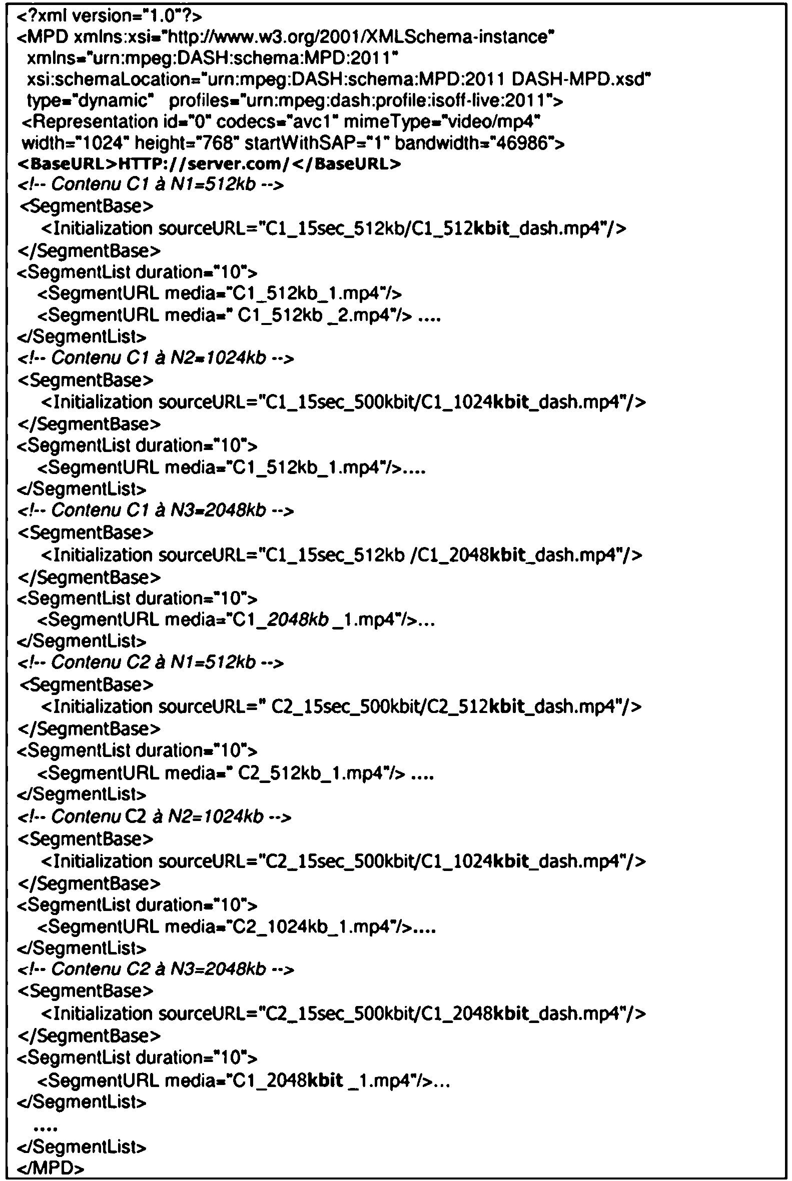

## Revendications

1. Procédé de gestion de l'accès, par un dispositif de lecture, à un premier contenu segmenté (C1) dont les segments sont décrits dans des fichiers de description respectifs (MNFc1), **caractérisé en ce qu'**un accès à un premier contenu donné entraîne à la fois une réception de fichiers de description associés à ce premier contenu (C1) avec une fréquence donnée et des fichiers de description associés à un deuxième contenu (C2) avec une autre fréquence.

2. Procédé de gestion selon la revendication 1, **caractérisé en ce que** l'accès au premier contenu (C1) entraîne aussi le téléchargement d'une partie des segments décrits dans le fichier de description associé au deuxième contenu.

3. Procédé de gestion selon la revendication 1, **caractérisé en ce que** les fichiers de description associés au deuxième contenu sont reçus avec une fréquence moins élevée.

4. Procédé de gestion selon la revendication 1, **caractérisé en ce que**, le deuxième contenu est un contenu adjacent au premier contenu.

5. Procédé de gestion selon la revendication 1, **caractérisé en ce que** le deuxième contenu est un contenu inclut dans une liste de contenus prédéfinie.

6. Entité de gestion (ENT1) de gestion de l'accès, par un dispositif de lecture, à un premier contenu segmenté (C1) dont les segments sont décrits dans des fichiers de description respectifs (MNFc1), **caractérisé en ce qu'**elle comprend un module apte, suite à un accès à un contenu donné, à requérir une réception de fichiers de description associés à ce premier contenu avec une fréquence donnée et des fichiers de description associés à un deuxième contenu avec une autre fréquence.

7. Dispositif de lecture (STB) comprenant une entité de gestion (ENT1) telle que définie dans la revendication 6.

8. Programme d'ordinateur apte à être mis en œuvre sur une entité de gestion (ENT1) telle que définie dans la revendication 4, le programme comprenant des instructions de code qui, lorsqu'il est exécuté par un processeur, réalise les étapes du procédé définies dans la revendication 1.

9. Support de données sur lequel a été mémorisée au moins une série d'instructions de code de programme pour l'exécution d'un procédé selon la revendication 1.

10. Procédé de gestion de la transmission de fichiers de description associés à un premier contenu diffusé en temps réel, dont les segments sont décrits dans des fichiers de description respectifs (MNFc1), caractérisé ce qu'il comprend suite à une demande d'accès au premier contenu, une transmission à la fois de fichiers de description associés à ce premier contenu avec une fréquence donnée, et des fichiers de description associés à un deuxième contenu avec une autre fréquence.

11. Entité de gestion (ENT2) de la transmission de fichiers de description associés à un premier contenu diffusé en temps réel, dont les segments sont décrits dans des fichiers de description respectifs (MNFc1), caractérisé ce qu'elle comprend un module de transmission apte à, suite à une demande d'accès au premier contenu, transmettre à la fois de fichiers de description associés à ce premier contenu avec une fréquence donnée et des fichiers de description associés à un deuxième contenu avec une autre fréquence.

12. Serveur de contenus (SRV) **caractérisé en ce qu'**il comprend une entité (ENT2) telle que définie dans la revendication 11.

13. Programme d'ordinateur apte à être mis en œuvre sur une entité de gestion (ENT2) telle que définie dans la revendication 12, le programme comprenant des instructions de code qui, lorsqu'il est exécuté par un processeur, réalise les étapes du procédé définies dans la revendication 10.

14. Support de données sur lequel a été mémorisée au moins une série d'instructions de code de programme pour l'exécution d'un procédé selon la revendication 10.
